# DEMANDE DE BREVET EUROPEEN

(11) **EP 1 641 287 A2**
(43) Date de publication de la demande: **29.03.2006**
(21) Numéro de dépôt: 05300763.9
(22) Date de dépôt: 23.09.2005
(51) Int. Cl.: H04N 13/00

(54) **Dispositif vidéo d'augmentation de réalité augmentée et procédé de comparaison de deux environnements**

(30) Priorité: 24.09.2004 FR 0410158
(71) Demandeur: Renault s.a.s., 92100 Boulogne Billancourt (FR)
(72) Inventeur: Panerai, Francesco, 75116 Paris (FR); Kemeney, Andras, 75116 Paris (FR)

(57) **Abrégé**

Dispositif vidéo (1), comportant un support (2) adapté pour être positionné fixement sur la tête (3) d'un utilisateur du dispositif (1), un ensemble d'acquisition d'images (4) et un ensemble de visualisation d'images (5), ces ensembles (4, 5) étant montés fixement sur ledit support (2).

L'ensemble d'acquisition d'images (4) comporte des caméras vidéo droite et gauche (6a, 6b) couvrant chacune respectivement des champs optiques droit et gauche (7a, 7b), ces caméras étant orientées selon des premier et second axes optiques principaux divergents (8a, 8b), de façon que les champs optiques droit et gauche (7a, 7b) aient une portion de champ optique commune dite champ binoculaire (9).

## Description

La présente invention concerne, de façon générale, un dispositif vidéo pour la visualisation d'un environnement et un procédé de comparaison de deux environnements.

Plus particulièrement, l'invention concerne un dispositif vidéo, comportant un support adapté pour être positionné fixement sur la tête d'un utilisateur du dispositif, un ensemble d'acquisition d'images et un ensemble de visualisation d'images, ces ensembles étant montés fixement sur ledit support.

Afin d'acquérir des images perçues par un observateur situé dans un environnement réel, de nombreux dispositifs vidéo portables comportant des supports positionnés sur la tête de l'observateur ont été développés. Un tel système d'acquisition est utilisé dans des systèmes d'augmentation de réalité virtuelle, ou dans des systèmes de communication à distance dans lesquels il est nécessaire de visualiser à distance ce qu'observe un observateur situé dans un environnement réel donné.
C'est la raison pour laquelle de nombreux fabricants de dispositifs d'acquisition vidéo ont développé diverses solutions visant à acquérir des images d'un environnement observé par un observateur selon une incidence donnée.

Un dispositif vidéo du type précédemment défini, permettant un telle acquisition d'images selon une incidence d'observation proche de celle d'un observateur portant le dispositif, est par exemple décrite dans le document brevet WO00/55714. Ce document divulgue un dispositif vidéo comportant un support ayant la forme d'un casque sur lequel est fixé une caméra centrée à un endroit du casque disposé au dessus du front de l'observateur. Ce casque comporte également un ensemble de visualisation comportant deux écrans sur lesquels sont projetés des images provenant d'un environnement distant de celui dans lequel se trouve l'observateur portant le casque.
Un autre dispositif vidéo du type précédemment défini et permettant également d'acquérir des images d'un environnement dans lequel se trouve l'observateur, selon une incidence d'observation proche de celle de l'observateur portant le dispositif, est par exemple décrit dans le document brevet WO 03/034397. Ce document présente une paire de lunettes ayant une branche sur laquelle est attachée une caméra pointant dans une direction d'observation de l'utilisateur. Un écran semi-transparent appelé sous le terme anglo-saxon « see throught » qui signifie voire à travers est installé face à l'une des optiques de la paire de lunettes pour permettre à l'observateur d'observer des images réelles de l'environnement dans lequel il se trouve au travers de l'écran semi-transparent. La caméra est reliée à un système informatique d'analyse des images acquises par la caméra, ces images acquises ayant sensiblement la même incidence que les images observées par l'observateur au travers de l'écran semi-transparent. Le système informatique reconnaît des marqueurs visuels disposés dans l'environnement dans lequel se trouve l'observateur et projettent des données issues d'une base de donnée sur l'écran semi-transparent, permettant ainsi de donner à l'utilisateur, en temps réel, des informations contextuelles sur l'objet qu'il est entrain d'observer.
Dans ce contexte, la présente invention a pour but de proposer un dispositif vidéo permettant d'acquérir des images d'un environnement dans lequel se trouve un observateur (aussi appelé utilisateur lorsqu'il porte le support sur sa tête), ces images devant être proches de celles observées.
A cette fin, le dispositif vidéo de l'invention, par ailleurs conforme à la définition générique qu'en donne le préambule défini précédemment, est essentiellement caractérisé en ce que l'ensemble d'acquisition d'images comporte des caméras vidéo droite et gauche couvrant chacune respectivement des champs optiques droit et gauche, ces caméras étant orientées selon des premier et second axes optiques principaux divergents, de façon que les champs optiques droit et gauche aient une portion de champ optique commune dite champ binoculaire.

La présence d'un champ optique binoculaire, c'est à dire un champ visuel total dans l'exercice normal d'une vision binoculaire comprenant une partie centrale commune visualisée par chaque caméra permet de donner une image en trois dimensions, binoculaire et proche de la vision binoculaire qu'aurait l'observateur s'il ne porterait pas le dispositif de l'invention. D'autre part, l'ensemble de visualisation fixé sur le support permet de visualiser l'image acquise par l'ensemble d'acquisition d'image.
Un tel dispositif peut par exemple être utilisé pour visualiser, en temps réel, l'intérieur d'un véhicule dans lequel se trouve l'observateur (appelé utilisateur) portant le support tout en permettant audit observateur de visualiser des images grâce à l'ensemble de visualisation d'images. Le fait que l'ensemble de visualisation d'images soit fixé sur le support permet à l'utilisateur de pouvoir toujours avoir devant l'un au moins de ses yeux, une image affichée, et cela quel que soit l'environnement dans lequel il se trouve car l'ensemble de visualisation portable est de fait d'encombrement réduit.

On peut préférentiellement faire en sorte que l'ensemble de visualisation d'images comporte des écrans de visualisation opaques droit et gauche, l'écran opaque droit étant adapté pour être disposé face à un oeil droit de l'utilisateur et afficher des images provenant de la caméra droite et l'écran opaque gauche étant adapté pour être disposé face à un oeil gauche de l'utilisateur et afficher des images provenant de la caméra gauche.
Grâce à ce mode de réalisation, outre le fait que le dispositif vidéo de l'invention puisse acquérir des images binoculaires tridimensionnelles d'un environnement dans lequel se trouve l'utilisateur, il est également possible à l'utilisateur de visualiser son environnement directement sur des écrans opaques fixés sur le support tout en conservant une vision binoculaire tridimensionnelle.

Il est également possible de faire en sorte que les écrans droit et gauche aient respectivement des troisième et quatrième axes optiques principaux divergents entre eux de façon que l'utilisateur observant les images affichées sur les écrans droit et gauche dudit dispositif perçoive un champ de visualisation binoculaire et ait des images affichées de champ horizontal global supérieur ou égal à 120°. De façon surprenante, par la caractéristique de divergence des troisième et quatrième axes optiques principaux, la qualité de l'image binoculaire est améliorée donnant à l'utilisateur la sensation d'être immergé dans l'environnement visualisé sur les écrans, l'image binoculaire permettant d'avoir une perception visuelle stéréoscopique.
D'autre part, le fait que les images affichées dans le champ de vision de l'utilisateur soient stéréoscopiques et soient affichées sur un champ d'affichage horizontal supérieur à 120°, permet à l'utilisateur de ne plus pouvoir visualiser que l'image présente sur les écrans, et de ne plus être perturbé par la vision d'autres éléments que ceux affichés.

Il est également possible de faire en sorte que les premier et second axes optiques principaux divergent entre eux d'un angle de divergence sensiblement égal à un angle de divergence formé entre les troisième et quatrième axes optiques principaux.
Grâce à cette caractéristique le traitement des images avant leur affichage est simplifié car l'angle de divergence des caméras et des afficheurs est unique, ce qui diminue grandement le nombre d'opération de traitement d'image et accélère ainsi la vitesse d'affichage. Le temps de décalage entre le moment d'acquisition d'image et le moment d'affichage est ainsi réduit à environ 16 millisecondes.

Il est également possible de faire en sorte que le dispositif vidéo comporte un moyen de traitement de signaux vidéo relié audits ensembles d'acquisition et de visualisation, ce moyen de traitement de signaux vidéo étant adapté pour former des images à partir des images acquises par l'ensemble d'acquisition d'images et pour retransmettre les images ainsi formées vers l'ensemble de visualisation d'images, de façon à afficher les images formées.
Préférentiellement le moyen de traitement de signaux vidéo est adapté pour corriger en temps réel les distorsions géométriques pouvant être introduites par l'optique qui possède un large champ de vision (c'est à dire un champ de vision supérieur ou égal à 120°).
Ce moyen de traitement de signaux vidéo est par exemple un ordinateur situé à distance du support et exécutant un programme de traitement vidéo. Grâce à un tel moyen de traitement vidéo, il est possible de traiter l'image acquise avant de l'afficher. De tels traitements peuvent être par exemple une modification de la luminosité, du contraste, de la couleur de certaines parties de l'image, de l'importance du champ binoculaire. Un traitement particulièrement important pour la mise en oeuvre de l'invention consiste à modifier les images acquises par les caméras pour que les images affichées dans le champ de vision de l'utilisateur donnent l'impression d'une observation de l'environnement directement avec les yeux de l'observateur. Ce traitement consiste à translater virtuellement les images acquises par chaque caméra et à modifier virtuellement les angles de vues de chaque caméra pour faire virtuellement coïncider la focale de chaque caméra avec la focale correspondante de chaque oeil.

Avantageusement le moyen de traitement de signaux vidéo est adapté pour :
- former, en temps réel, à partir d'une images acquises par l'ensemble d'acquisition, une image tridimensionnelle d'un premier environnement observé suivant une première incidence,
- lire une image tridimensionnelle de synthèse préalablement mémorisée d'un second environnement et traiter cette image de synthèse pour qu'elle paraisse observée suivant ladite première incidence ;
- et pour transmettre à l'ensemble d'affichage, un signal vidéo d'affichage tel que l'ensemble de visualisation recevant ce signal vidéo affiche une image, dite image affichée, cette image affichée étant une superposition de l'image formée en temps réel et de l'image de synthèse dans un champ de vision d'un utilisateur portant ledit support.

L'image de synthèse est une image formée à l'aide de modèles mathématiques, une telle image peut être une image produite par un logiciel de conception assistée par ordinateur ou par un système de mesure tridimensionnelle. Grâce à cette caractéristique il est possible à un utilisateur situé dans un environnement physique réel (aussi appelé premier environnement) de visualiser cet environnement tout en y intégrant simultanément une image de synthèse. Par exemple, si l'observateur est positionné dans un habitacle de véhicule il lui sera possible d'afficher une image de synthèse d'un habitacle d'un autre véhicule permettant ainsi de comparer visuellement et en temps réel ces deux véhicules tout en étant mobil dans l'habitacle réel.
Suivant un autre exemple l'utilisateur pourra virtuellement remplacer dans son champ de vision, un élément affiché de son environnement réel, tel qu'un tableau de bord, et le remplacer par un autre élément issu d'une image de synthèse, tel qu'un autre tableau de bord de synthèse.
Le dispositif de l'invention permet d'immerger complètement l'utilisateur dans un environnement dont l'aspect est modifiable et dont l'affichage stéréoscopique et tridimensionnel est modifiable à volonté et en temps réel en fonction notamment de l'incidence d'observation choisie par l'observateur.

Pour permettre l'intégration d'images de synthèse dans l'image affichée de l'environnement réel, il est nécessaire de « caler » ces images entre elles pour leur conférer une perspective commune. Pour cela, il est possible d'analyser une image acquise et de la comparer avec une image de synthèse dans laquelle ont été préalablement intégrés des éléments repères également présents dans l'environnement réel tels que des marqueurs visuels. Ainsi, en repérant ces éléments dans l'image acquise, il est possible d'évaluer l'incidence de l'angle d'observation qu'avait l'observateur au moment de l'acquisition et donc de traiter l'image de synthèse pour qu'elle soit affichée avec la même incidence que l'image acquise.
Un autre moyen de parvenir à ce résultat est de faire en sorte que le dispositif de l'invention comporte des moyens de détection de la position du support par rapport à un environnement externe au support dans lequel ledit support est libre de se déplacer. Il est à noter que l'environnement externe est l'environnement réel dans lequel se trouve l'observateur et est également appelé premier environnement. Par exemple, l'environnement externe peut être l'habitacle d'un véhicule ou un cockpit.
Il est par exemple possible de faire en sorte que les moyens de détection de la position du support comprennent un dispositif émetteur de signaux de position, un dispositif récepteur de signaux de position et un dispositif réflecteur adapté pour réfléchir vers le dispositif récepteur des signaux de position émis par le dispositif émetteur, et qu'un ou deux desdits dispositif émetteur de signaux, dispositif récepteur de signaux de position et dispositif réflecteur est ou soient fixés sur ledit support.

Par comparaison des signaux de position émis par rapport aux signaux de position réfléchis et reçus par le dispositif récepteur, il est possible de connaître la position relative du dispositif réflecteur par rapport aux dispositifs émetteurs et récepteurs et par déduction, la position du support par rapport à son environnement externe donc l'incidence d'observation.
Ainsi l'information de position du support est transmise au moyen de traitement de signaux vidéo qui en déduit les directions de visées des caméras (direction des axes principaux de chaque caméra) dans l'environnement et leurs positions respectives dans cet environnement, et détermine ainsi l'incidence d'observation. Puis le moyen de traitement de signaux vidéo calcule ou lit à l'aide d'un modèle environnemental prédéterminé et enregistré dans une mémoire, une image de synthèse définie en fonction de l'incidence d'observation prise par l'observateur de manière que l'image de synthèse affichée paraisse observée selon ladite incidence de l'utilisateur. Une image de synthèse existe donc pour chaque position du support dans son environnement, et est déterminée en fonction de l'incidence d'observation pour pouvoir être superposée à une image formée en temps réel par au moins une étape d'acquisition d'image. Puis une image affichée est alors générée dans le champ de vision d'un observateur portant le dispositif de l'invention, sur les écrans de l'ensemble de visualisation en superposant l'image formée en temps réel à partir de l'image acquise avec l'image de synthèse correspondante.

En d'autres termes la présente invention (dispositif et procédé) permet de former en temps réel une composition d'images réelles (images vidéo formées par les caméras portées par l'utilisateur) et virtuelles (images de synthèse produites par exemple par un logiciel de dessin assisté par ordinateur). Ces images virtuelles comportent des scènes virtuelles d'un environnement virtuel tel qu'un poste de conduite virtuel.
L'invention autorise ainsi l'exécution des scénarii de conduite et la comparaison simultanée de postes de conduite réel et virtuel.
Il est également proposé un procédé de comparaison directe de deux environnements, ce procédé pouvant par exemple être mis en oeuvre à l'aide du dispositif selon l'invention. Ce procédé est essentiellement caractérisé en ce qu'il comprend au moins les opérations consistant à :
- former en temps réel une image tridimensionnelle d'un premier environnement observé suivant une première incidence ;
- lire une image tridimensionnelle de synthèse préalablement mémorisée d'un deuxième environnement, et traiter cette image de synthèse pour qu'elle paraisse observée suivant la première incidence ; et
- superposer dans le champ de vision d'un observateur l'image formée en temps réel et l'image de synthèse.

L'image tridimensionnelle formée est préférentiellement une image comportant un champ binoculaire et deux champs monoculaires. Préférentiellement, l'image formée en temps réelle est obtenue à l'aide de l'ensemble d'acquisition d'images du dispositif vidéo de l'invention dont le support est porté par un observateur/utilisateur. L'image formée est obtenue en positionnant l'ensemble d'acquisition d'image dans le premier environnent qui est un environnement réel et en observant cet environnement réel suivant une première incidence donnée qui est liée par une relation fixe à la position d'observation et à l'incidence d'observation prises par l'observateur utilisateur portant le support du dispositif vidéo de l'invention.

D'autres caractéristiques et avantages de l'invention ressortiront clairement de la description qui en est faite ci-après, à titre indicatif et nullement limitatif, en référence aux dessins annexés, dans lesquels:
la figure 1 représente une vue de dessus d'un dispositif vidéo selon l'invention ;
la figure 2 représente une vue de coté du dispositif vidéo de l'invention en cours d'utilisation pour l'acquisition d'images ;
la figure 3 est un schéma des étapes mises en oeuvre par le dispositif pour l'affichage d'une image acquise ;
la figure 4 est un schéma des étapes d'affichage pour l'affichage par le dispositif d'une image acquise et d'une image de synthèse.

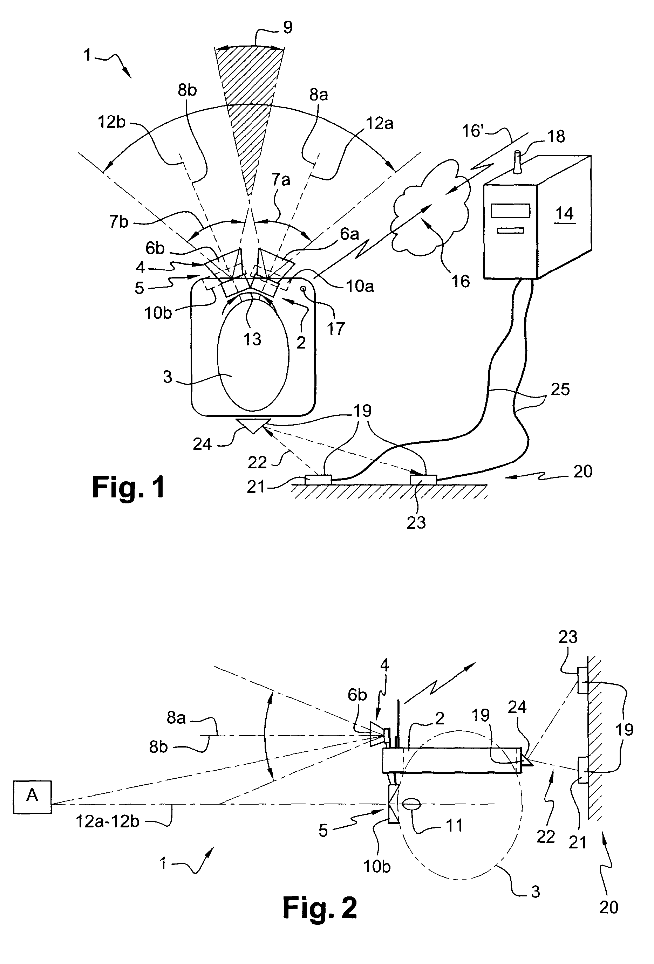

Comme annoncé précédemment, l'invention concerne un dispositif vidéo 1, comportant un support 2 ayant la forme d'un casque ou d'une couronne (tel que le support représenté sur les figures 1 et 2). Cette couronne est adapté pour être positionnée fixement sur la tête 3 d'un utilisateur du dispositif 1.
Un ensemble d'acquisition d'images 4 et un ensemble de visualisation d'images 5, sont montés fixement sur ledit support 2. Ces ensembles sont liés au support par une liaison fixe qui peut éventuellement être réglable en position pour permettre par exemple la mise au point du dispositif ou son adaptation aux dimensions de la tête 3 de l'utilisateur, et notamment à la position de ses yeux 11 (visibles sur la figure 2) .
L'ensemble d'acquisition d'images 4 comporte des caméras vidéo droite et gauche 6a, 6b couvrant chacune respectivement des champs optiques droit et gauche 7a, 7b. Ces caméras sont orientées selon des premier et second axes optiques principaux divergents 8a, 8b, de façon que les champs optiques droit et gauche 7a, 7b aient une portion de champ optique commune dite champ binoculaire 9.

Des écrans de visualisation opaques 10a, 10b, sont également fixés sur le support pour masquer complètement le champ visuel de l'utilisateur du dispositif.
L'écran opaque droit 10a est placé face à un oeil droit de l'utilisateur et affiche des images provenant de la caméra droite 6a et l'écran opaque gauche 10b étant placé face à un oeil gauche 11 de l'utilisateur et affiche des images provenant de la caméra gauche 6b. Chaque écran possède un axe principal optique appelé troisième axe 12a pour l'écran droit 10a et quatrième axe 12b pour l'écran gauche 10b. Chaque caméra possède également un axe optique principal appelé premier axe 8a pour la caméra de droite 6a et second axe 8b pour la caméra de gauche 6b. Les premier et troisième axes sont parallèles entre eux et les second et quatrième axe sont également parallèles entre eux.
Le champ de visualisation binoculaire perçu par l'utilisateur observant l'image affichée est adapté pour être proches du champ réel binoculaire que percevrait ledit utilisateur si celui-ci ne portait pas le dispositif vidéo de l'invention. Il est à noter qu'un champ binoculaire est la partie commune à deux champs monoculaires partiellement sécants, ce champ binoculaire permet d'avoir une vision stéréoscopique précise et une vision tridimensionnelle. Egalement chaque caméra possède préférentiellement une ouverture d'angle choisie pour être proche de l'ouverture d'angle d'un oeil de l'utilisateur du système. Les caméras sont préférentiellement disposées pour que l'ensemble d'acquisition d'images ait un champ de vision global de grande ouverture et proche du champ de vision global réel d'un utilisateur du dispositif (ce champ de vision étant supérieur ou égale à 120°). Préférentiellement, la largeur de chacun des champs optiques (droit et gauche) acquis par les caméras est supérieure ou égale à 120°. Ainsi le dispositif est prévu pour que dans un mode de visualisation particulier, un utilisateur observant des images d'un objet perçues par l'ensemble d'acquisition d'images et affichées sur l'ensemble de visualisation d'images ait sensiblement la même impression visuelle que si il observait directement l'objet sans avoir recours au dispositif vidéo selon l'invention. Grâce à cette caractéristique, il est possible de modifier à volonté l'image affichée par l'ensemble de visualisation, depuis une image sensiblement identique à l'image que percevrait un observateur n'utilisant pas le dispositif de l'invention jusqu'à une image affichée intégrant des modifications de certaines zones d'image acquise, en supprimant par exemple certaines zones de l'image affichée de l'objet réel et en superposant dans ces zones d'images supprimées à l'affichage, des images de synthèse. Ce dispositif permet ainsi à un utilisateur situé dans un environnement réel de visualiser, en temps réel, des images de synthèse superposées à une image semblable à l'image réelle qu'il percevrait s'il n'utilisait pas le dispositif vidéo.

Chaque caméra est reliée par une liaison sans fil à un moyen de traitement de signaux vidéo 14 recevant les signaux correspondants aux images acquises par les caméras. Le moyen de traitement qui est également relié à l'ensemble d'affichage traite les signaux vidéo reçus, y ajoute éventuellement une image de synthèse et les transmet sur les écrans opaques 10a et 10b de l'ensemble de visualisation.

Ce moyen de traitement de signaux vidéo est un ordinateur situé à distance du support et exécutant un programme de traitement vidéo. Comme mentionné précédemment, cet ordinateur est relié aux ensembles d'acquisition 4 et de visualisation 5 par un réseau de transmission de données vidéo 16 comprenant préférentiellement un premier ensemble de réception /émission de données 17 fixé sur ledit support 2 et un second ensemble de réception / émission de données 18 disposé à distance du support 2 et relié à l'ordinateur 14 et communiquant avec ledit premier ensemble 17. Ces premier et second ensembles de réception / émission de données 17, 18 peuvent être reliés entre eux par un réseau filaire ou par une liaison sans fils tel que cela est représenté sur l'exemple des figures 1 et 2.

Des moyens de détection de la position 19 du support par rapport à l'environnement externe 20 sont installés en partie sur le support et en partie sur des emplacements fixes de l'environnement 20 par rapport auxquels ledit support 2 est libre de se déplacer. Un dispositif émetteur 21 de signaux de position 22 et un dispositif récepteur 23 de signaux de position 22 sont fixés en des premier et second emplacements de l'environnement 20, et un dispositif réflecteur 24 adapté pour réfléchir vers le dispositif récepteur 23 des signaux de position 22 est fixé à l'arrière du support 2. Les dispositifs émetteur 21 récepteur 23 de signaux de position 22 sont reliés au moyen de traitement de signaux vidéo 14 par un réseau de données afin de transmettre au moyen de traitement de signaux, des données concernant la position détectée du support. Le moyen de traitement de signaux détermine à chaque instant l'incidence d'observation courante prise par l'utilisateur.

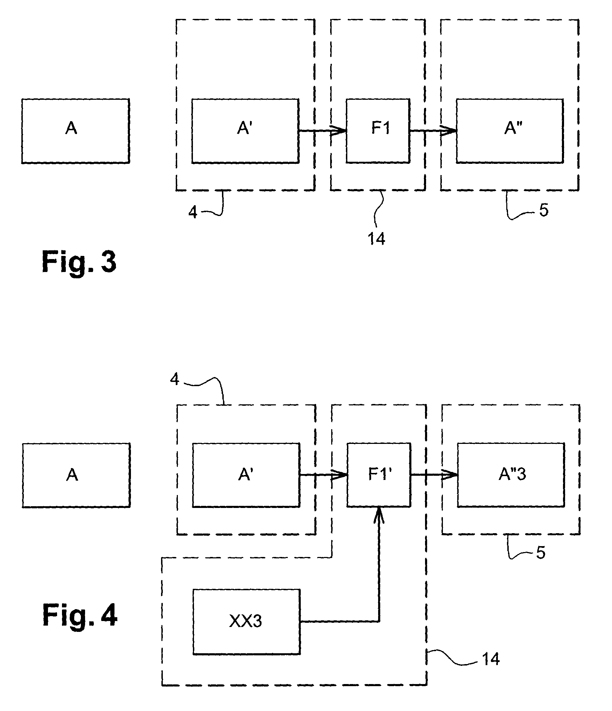

La figure 3 est une illustration d'un mode de fonctionnement du dispositif de l'invention. Un objet réel A est observé par l'utilisateur ayant une première incidence d'observation. L'image réelle est l'image qui serait réellement perçue par l'observateur placé dans le premier environnement 20 dit environnement réel, s'il ne portait pas le dispositif de l'invention et s'il observait cet environnement réel selon la première incidence. Le dispositif de l'invention est adapté pour reproduire cette image de l'objet A , et de l'environnement 20 devant les yeux de l'utilisateur, à l'aide de l'ensemble de visualisation 5.
Pour cela, les caméras de l'ensemble d'acquisition 4 captent une image de cet objet/environnement et obtiennent une image acquise A' qui est l'image perçue et formée par l'ensemble d'acquisition d'images lorsque l'utilisateur porte le dispositif de l'invention et est placé dans l'environnement réel dans la première incidence.

L'image acquise A' est transmise au moyen de traitement de signaux 14 et traitée, par ce dernier par une fonction F1, pour être modifiée par translation et déformation de sorte que le moyen de traitement 14 transmette un signal d'affichage vers l'ensemble d'affichage 5 pour y afficher, dans le champ de vision de l'utilisateur du dispositif de l'invention, une image affichée A" sensiblement équivalente à l'image réelle de l'objet A.

La figure 4 est une illustration d'un mode de fonctionnement particulier de l'invention dans lequel l'objet réel A est observé par l'utilisateur via l'ensemble d'acquisition d'image 4 qui produit une image acquise A' et la transmet au moyen de traitement de signaux vidéo 14. Dans le même temps, le moyen de détection de position 19 transmet l'incidence d'observation courante dans l'environnement au moyen de traitement de signaux vidéo 14. Le moyen de traitement de signaux 14 utilise une image de synthèse préalablement mémorisée XX3 d'un second environnement virtuel et la traite pour faire en sorte que cette image de synthèse paraisse observée suivant la première incidence. Le moyen de traitement de signaux vidéo 14 réalise une opération de superposition F1' et superpose dans le champ de vision de l'utilisateur, grâce aux écrans opaques de l'ensemble de visualisation 5, une image A''3 superposant l'image formée à partir de l'image acquise en temps réel A', avec l'image de synthèse XX3, ces deux images semblant vues selon la même incidence.

## Revendications

1. Dispositif vidéo (1), comportant un support (2) adapté pour être positionné fixement sur la tête (3) d'un utilisateur du dispositif (1), un ensemble d'acquisition d'images (4) et un ensemble de visualisation d'images (5), ces ensembles (4, 5) étant montés fixement sur ledit support (2), **caractérisé en ce que** l'ensemble d'acquisition d'images (4) comporte des caméras vidéo droite et gauche (6a, 6b) couvrant chacune respectivement des champs optiques droit et gauche (7a, 7b), ces caméras étant orientées selon des premier et second axes optiques principaux divergents (8a, 8b), de façon que les champs optiques droit et gauche (7a, 7b) aient une portion de champ optique commune dite champ binoculaire (9).

2. Dispositif vidéo (1) selon la revendication 1, **caractérisé en ce que** l'ensemble de visualisation d'images (5) comporte des écrans de visualisation opaques droit et gauche (10a, 10b), l'écran opaque droit (10a) étant adapté pour être disposé face à un oeil droit de l'utilisateur et afficher des images provenant de la caméra droite (6a) et l'écran opaque gauche (10b) étant adapté pour être disposé face à un oeil gauche (11) de l'utilisateur et afficher des images provenant de la caméra gauche (6b).

3. Dispositif vidéo (1) selon la revendication 2, **caractérisé en ce que** les écrans droit et gauche (10a, 10b) ont respectivement des troisième et quatrième axes optiques principaux (12a, 12b) divergents entre eux de façon que l'utilisateur observant les images affichées sur les écrans droit et gauche dudit dispositif perçoive un champ de visualisation binoculaire (9) et ait des images affichées de champ horizontal global supérieur ou égal à 120°.

4. Dispositif vidéo (1) selon l'une quelconque des revendications 1 à 3, **caractérisé en ce qu'**il comporte un moyen de traitement de signaux vidéo (14) relié audits ensembles d'acquisition (4) et de visualisation (5), ce moyen de traitement de signaux vidéo (14) étant adapté pour former des images à partir des images acquises (A') par l'ensemble d'acquisition (4) d'images (A') et pour retransmettre les images ainsi formées vers l'ensemble de visualisation d'images (5), de façon à afficher les images formées (A").

5. Dispositif vidéo (1) selon la revendication 4, **caractérisé en ce que** le moyen de traitement de signaux vidéo (14) est adapté pour :
- former, en temps réel, à partir d'une images acquises (A') par l'ensemble d'acquisition (14), une image tridimensionnelle d'un premier environnement observé suivant une première incidence,
- lire une image tridimensionnelle de synthèse (XX3) préalablement mémorisée d'un second environnement et traiter cette image de synthèse pour qu'elle paraisse observée suivant ladite première incidence ;
- et pour transmettre à l'ensemble d'affichage, un signal vidéo d'affichage tel que l'ensemble de visualisation (5) recevant ce signal vidéo affiche une image, dite image affichée (A''), cette image affichée étant une superposition de l'image formée en temps réel et de l'image de synthèse (XX3) dans un champ de vision d'un utilisateur portant ledit support (2).

6. Dispositif vidéo (1) selon l'une quelconque des revendications 1 à 5 combinée à la revendication 3, **caractérisé en ce que** les premier et second axes optiques principaux (8a, 8b) divergent entre eux d'un angle de divergence (13) sensiblement égal à un angle de divergence formé entre les troisième et quatrième axes optiques principaux (12a, 12b).

7. Dispositif vidéo (1) selon l'une quelconque des revendications 1 à 6, **caractérisé en ce qu'**il comporte des moyens de détection de la position (19) du support par rapport à un environnement externe (20) au support (2) dans lequel ledit support (2) est libre de se déplacer.

8. Dispositif vidéo (1) selon la revendication 7, **caractérisé en ce que** les moyens de détection de la position (19) du support comprennent un dispositif émetteur (21) de signaux de position (22), un dispositif récepteur (23) de signaux de position (22) et un dispositif réflecteur (24) adapté pour réfléchir vers le dispositif récepteur (23) des signaux de position (22) émis par le dispositif émetteur (21), et **en ce qu'**un ou deux desdits dispositif émetteur de signaux (21), dispositif récepteur de signaux (23) de position et dispositif réflecteur (24) est ou sont fixé(s) sur ledit support (2).

9. Dispositif vidéo (1) selon l'une quelconque des revendications 7 et 8 combinée à la revendication 3, **caractérisé en ce que** certains des moyens de détection de la position du support (19) sont reliés audit moyen de traitement de signaux vidéo (14) par un réseau de données (25) afin de transmettre au moyen de traitement de signaux, des données concernant la position détectée du support (2).

10. Procédé de comparaison directe de deux environnements, **caractérisé en ce qu'**il comprend au moins les opérations consistant à :
- former en temps réel une image tridimensionnelle d'un premier environnement (20) observé suivant une première incidence ;
- lire une image tridimensionnelle de synthèse préalablement mémorisée d'un deuxième environnement, et traiter cette image de synthèse (XX3) pour qu'elle paraisse observée suivant la première incidence ; et
- superposer dans le champ de vision d'un observateur l'image formée en temps réel et l'image de synthèse.
